# EUROPEAN PATENT SPECIFICATION

(11) **EP 1 525 206 B1**
(45) Date of publication and mention of the grant of the patent: **02.09.2009**
(21) Application number: 03741094.1
(22) Date of filing: 03.07.2003
(51) Int. Cl.: C07F 9/38, C08G 73/04, C02F 5/14

(54) **POLYAMINOMETHYLENEPHOS PHONATE DERIVATIVES**
POLYAMINOMETHYLENPHOSPHONAT-DERIVATE
DERIVES DE POLYAMINOMETHYLENEPHOSPHONATE

(30) Priority: 31.07.2002 IT MI20021706
(43) Date of publication of application: 27.04.2005
(73) Proprietor: Giovanni Bozzetto S.p.A., 24121 Bergamo (IT)
(72) Inventor: PALADINI, Massimo, I-24100 Bergamo (IT); SPINI, Francesco, I-24100 Bergamo (IT); SCALVEDI, Alessandro, I-24011 Alme (IT); TARALLO, Daniele, I-20090 Segrate (IT); VALLE, Jean, Claude, I-24100 Bergamo (IT)
(74) Representative: Pipparelli, Claudio
(86) International application number: PCT/IT2003/000420
(87) International publication number: WO 2004/011475

(56) References cited:
- EP-A- 0 282 260
- EP-A- 0 479 462
- EP-A- 0 628 518
- WO-A-01/79215
- GB-A- 1 392 044
- GB-A- 2 244 050
- US-A- 4 085 134
- US-A- 4 187 245
- CHEMICAL ABSTRACTS, vol. 132, no. 5, 31 January 2000 (2000-01-31) Columbus, Ohio, US; abstract no. 54509, WANG, RUI ET AL: "(HO)2OPCH2{N[CH2PO(OH)2]CH2CH2}nN[CH2PO(O H)2]2" XP002228000 & ZHONGGUO FUSHI YU FANGHU XUEBAO (1999), 19(5), 273-279, 1999,
- SOVIET INVENTIONS ILLUSTRATED Section Ch, Week 7941, 21 November 1979 (1979-11-21) Derwent Publications Ltd., London, GB; Class A91,Page 12, AN 75036b XP002228001 & SU 643 177 A (ENERGOTSVETMET), 25 January 1979 (1979-01-25)
- FRIGERIO, M. ET AL: "Sequestering agents in dyeing and printing" TINCTORIA (1987), 84(3), 57-64 , 1987, XP008024344

## Description

The present invention relates to a new class of phosphonates and related salts, the method of preparation of the same and their utilization in the preparation of water additives to be used in different industrial fields. More particularly, the present invention relates to the preparation of products that impart to the water the particular characteristics needed for its utilisation. More specifically, the products and the processes according to the present invention make available new additives that prevent the segregation of solids from their aqueous solutions or dispersions acting as precipitation inhibitors and dispersants.

The present invention will be here described with particular reference to the preparation and to the use of the products and processes for the preparation and the stabilization of aqueous dispersions, even though its scope should not be limited to those possible applications of the invention described above.

It is known that water found in the natural state (apart from rainwater) in the form of rivers, lakes and seas contains a certain quantity of metal ions and anions of different types in various proportions, depending on their origins; such metal ions can lead to the formation of a precipitate when water taken from a natural environment is used for industrial purposes. In this conditions, water which is normally in equilibrium with the external environment is affected by different physical-chemical conditions and if the concentration of salts in these new conditions exceeds the solubility product (supersaturation) their precipitation is observed during the utilisation.

Salts showing this phenomenon are generally formed by earth-alkali metals (Ca; Ba; Mg); among them Calcium -- mostly as carbonate but also as sulfate -- is the main responsible for the phenomena of incrustation in several industrial water applications.

The incrustation ( not only limited to poory soluble salts ) is generally called "SCALE" by water treatment experts.

Several factors are responsible for "supersaturation" and thus for the precipitation of aqueous solutions containing calcium carbonate. The CaCO₃ / CO₂ / H₂O system is described schematically here:

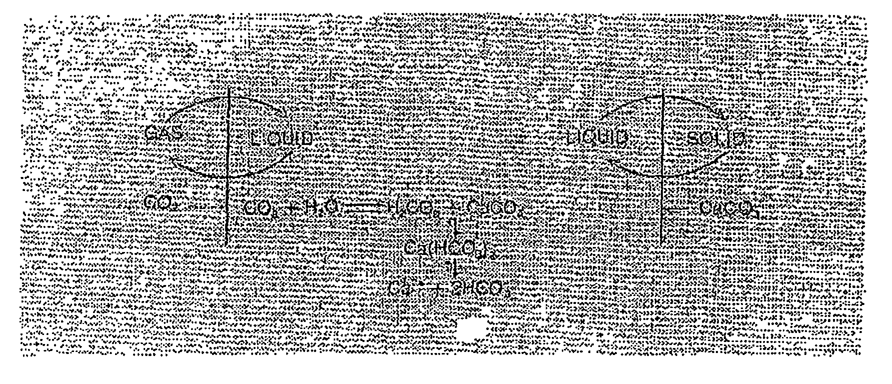

Calcium is present in all surface waters in the form of soluble bicarbonate (HCO₃⁻) because of the absorption of carbon dioxide from the atmosphere. Any modification of such a system leads, in a more or less marked way, to precipitation of the CaCO₃.

The causes are different and can be classified as follows:
1.Concentration of the solution (evaporation of the aqueous phase);
2.Variation of the temperature. By heating, the following transformation Ca(HCO₃)₂ CaCO₃ + CO₂ + H₂O takes place.
3.Variations of the pH. An increase of the pH of the system results in the following transformation:
4. Ca(HCO₃)₂ + 2 OH⁻ → CaCO₃ + CO₃⁻ + 2 H₂O

As far as cooling and/or heat-exchanger circuits is concerned, the incrustation (scale) formation mechanism can be attributed to precipitation of salts from supersaturated solutions in the region adjacent to the heat exchange surface of the system.

The effects of such uncontrolled precipitation are sometimes disastrous. For example, in cooling systems, where large volumes of water are used, the deposits of CaCO₃ accumulate in big quantity in the pipes causing reduction of the thermal exchange capacity and leading to virtual occlusion of the pipes making necessary the removal of the deposits by acidic treatment with consequent shutdown of the plant. Moreover, the formation of CaCO₃ incrustation facilitates the incorporation of solid particles that cannot be chemically removed (e.g. SiO₂) or the growth of bacteria and algae.

In order to overcome these disadvantages, pretreatments have been proposed:
they provide for the preventive elimination of low-solubility salts by ionic exchange, precipitation,or by the use of suitable "sequestering agents" and suitable " scale inhibitors".

Preventive elimination is in most cases not economically acceptable because of the large volumes of water involved.

The same can be said for the chelating agents; it is well known that these substances forms water-soluble complexes with the metal ions, in a well defined stoichiometric molar ratio.

The preferred treatment today involves for the use of suitable " scale inhibitors" using the so called " Threshold Effect". The Threshold Effect was discovered by observing the behaviour of inorganic polyphosphates that prevent the precipitation of the CaCO₃ from supersaturated solutions by means of sub-stoichiometric concentrations (Hatch and Rice, Indust. Eng. Chem., 31,51-53 (1939); Reitemeier and Buehrer, J.Phys. Chem., 44 (5), 535-536 (1940); Fink and Richardson U.S. Pat. No. 2,358,222; and Hatch, U.S. Pat. No. 2,539,305 ).

The mechanism by which the precipitation is inhibited is not completely understood today, although the adsorption of inhibitor onto the crystalline surface seems necessarily to be the first step in the inhibition process. The molecules of inhibitor are attracted on the growing crystalline surface by the presence of metal cations such as Ca, Mg, Ba for which they have a great affinity.

Once the molecules of inhibitor are adsorbed, they locate on the surface of the crystal, thus disturbing the regularity of its growth.

If all this happens in the "nucleation" phase, i.e. in the stage in which a certain number of molecules in solution begin to aggregate in order to give rise to a crystal nucleus, the inhibitor can disturb nuclear growth to such an extent as to make the nucleus redissolve.

Such ability, exercised by various polyelectrolytes, is particularly marked in the case of phosphonates, which moreover combine corrosion inhibition functions with great resistance to hydrolysis.

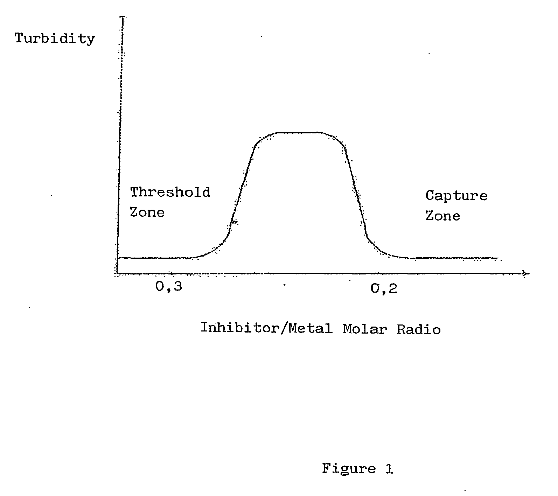

However, for every operating condition there is a limit to the molar ratio between inhibitor and metal. In fact, by increasing the phosphonate quantity beyond a certain limit, precipitation of insoluble calcium salts of phosphonates is observed; in such "turbidity" zone, the phosphonate is no longer active. The effectiveness of the phosphonates at various inhibitor/metal ratios is shown schematically in figure 1, where the x-axis reports the molar ratio between metal and inhibitor, while the y-axis reports the turbidity measured nephelometrically.

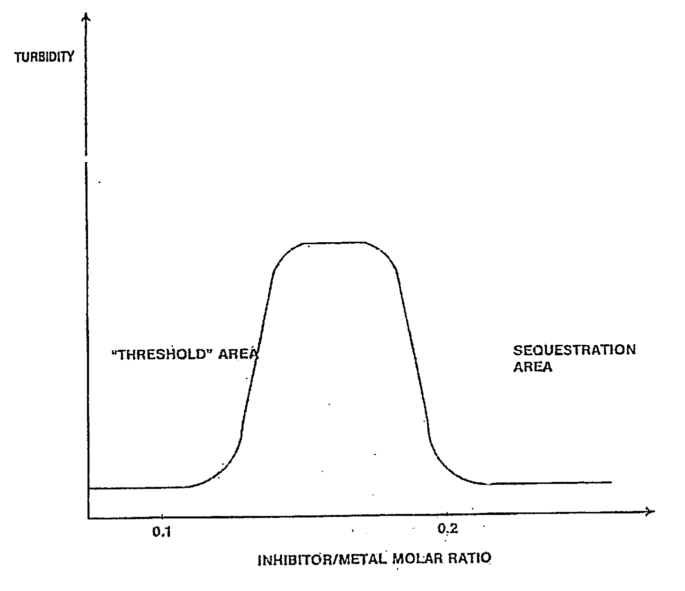

Furthermore, it is well known that it is necessary to provide for more critical recovery cycles of industrial water -- above all because of an increasing use of water resources -- in order to reduce both the quantity of water used and the environmental impact of the treatment agents.

### Summary of the invention

The present invention relates to phosphonates, to a simple and economic process for the production of said phosphonates and to the use of said phosphonates in water treatment applications. Related prior art is given as follows:
EP-A 479 462 discloses a method for inhibiting the formation of scale in waters having a high barium content by using a high molecular weight phsphonate.
WO 01/79215 discloses N^{α},N^{ω}-dialkyl aminomethylenephosphonic acids and their use in the treatment of water.
Zhongguo Fushi Yu Fanghu Xuebao 1999, 19(5), 273-279 describes the scale inhibition effect of four methylenephosphonic acids.
EP-A 628 518 describes a process of inhibiting oxalate scale formation by polyamino hexamethylene phosphonates.
EP-A 282 260 discloses the inhibition of manganese depositions in water systems by organic aminophosphonic acids.
GB-A 2 244 050 discloses the use of phosphonate metal complex molecules to inhibit the formation of scale in aqueous liquid containing dissolved materials.
GB-A 1 392 044 discloses the synergistic combination of an inorganic nitrite and an organic phosphonic acid as a corrosion inhibitor.
SU-A 643 177 describes poly-N-phosphoryl-oxy-methyl-poly-ethyleneimine used as additive to prevent calcium sulphate deposition in the regeneration of ion-exchange resin.
TINCTORIA (1987), 84(3), 57-64 "Prodotti sequestranti in tintura e stampa" describes the use of sequestering agents in dyeing and printing.
US-A 4 085 134 discloses amino-phosphonic-sulfonic acids as scale and corrosion inhibitors.
US-A 4 187 245 discloses hydroxypropylene-amino-phosphonic-sulfonic acids as scale and corrosion inhibitors.
Therefore, the main object of the present invention are phosphonates that can be used for water treatment.

In general such compounds can be the derivatives of polyaminomethylenephosphonates having the following general formula: 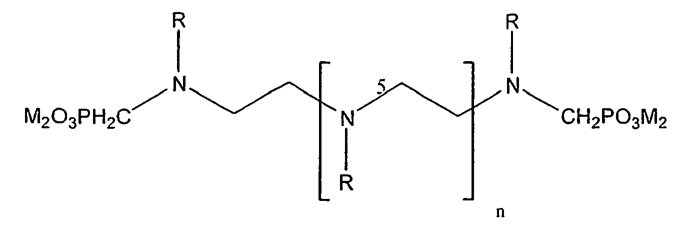 where *n* is an integer between 2 and 15000 preferably between 2 and 50; M₂ may be hydrogen or a suitable cation and each R group may be a - CH₂-PO₃M₂, group or a linear or branched alkyl residue resulting from the reaction of the groups with the following reagent classes:
1) 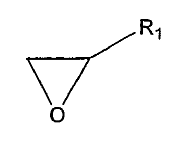 where R¹ may be H, CH₃, CH₂Cl, CH₂OH
2) 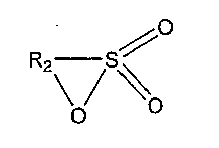 where R₂ is an alkyl with the number of carbon atoms between 3 and 5.
3) 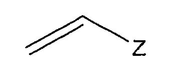 where Z is a group from among: CONH₂, CHO, COOR₃ COOX, CN, where R₃ = CH₃, C₂H₅, and where X = H, Na, K, NH₄.

In Particular, the compounds are the derivatives of polyaminomethylenephosphonates according to the above mentioned formula where the polyamine chain may be linear or branched, and where n is an integer or fractional integer which is, or on average is, from about 2 to about 15000 : M₂ may be hydrogen or a suitable cation such as alkali metal or ammonium, and where each R group my be the same or different and is independently selected from the following classes:

| | |
|---|---|
| 1. -CH₂PO₃M₂ | where M may be hydrogen or a suitable cation such as alkali metal or ammonium; |
| 2. CH₂R | where R = CH₂OH; CHOHCH₃; CHOHCH₂Cl; CHOHCH₂OH |
| 3. (CH₂)ₙSO₃M | where n = 3÷4 where M may be hydrogen or a suitable cation such as alkali metal or ammonium; |
| 4. CH₂CH₂R | where R = CONH₂, CHO, COOR₁, COOX, CN |
| | where R₁ = CH₃÷C₂H₅ |
| | where X may be hydrogen or a suitable cation such as alkali metal or ammonium |

with the condition that at least one of substituent R should be different from the methylenephosphonated group (i.e.: other than -CH₂PO₃M₂).

A particular advantage of this class of phosphonates, is that such compounds do not show "Turbidity Zone" and are therefore to be considered non Calcium-sensitive at any concentration and temperature tested; they are also effectives at high pH values (>10).

This is very important since calcium tolerance of the traditional scale inhibitors like HEDP or ATMP quickly reduces with increasing the pH; in particular this is important today because water treatment processes are carried out at higher pH values than in the past. In fact, higher pH reduces the effects of corrosion, which is more marked at lower pH.

The advantages of this new class of phosphonates, object of this invention, that can be summarised as follows:
1. Threshold Effect, typical of the phosphonates, i.e. inhibition of precipitation from solutions supersaturated with CaCO₃ and/or CaSO₄ at sub-stoichiometric concentrations of the inhibitor.
2. Non calcium-sensitivity: increases in pH and concentration of calcium strongly affect the tolerance of the standard phosphonates (HEDP, ATMP, etc.) to calcium, increasing the possibility of precipitation of poorly soluble calcium-phosphonate salts.
3. Dispersing Effect: better than the traditional phosphonates. This new class of phosphonates behaves like the acrylic polymers. They act as dispersants and deflocculants, stabilizing colloidal systems which remain steadily dispersed for long periods.
4. Corrosion Inhibition: comparable to that of the standard phosphonates.
5. Chelating Effect: comparable to that of the standard phosphonates.
6. Hydrolitic Stability: similar to conventional phosphonates

As shown in point 3) above, in addition to the threshold effect, the products object of the present invention shows high "dispersing ability".

This property became evident when the sequestering power is determined by the traditional "HAMPSHIRE " method: with this method it is not possible to identify an end-point during the titration with calcium acetate.

This property suggests a potential application of this new class of phosphonates as deflocculants, in a certain number of processes and applications where they are involved as stabilizers for different kind of dispersions like pigments (TiO2), kaolin and drilling mud stabilizers for different kind of dispersions like pigments (TiO2), kaolin and drilling mud and in the industrial and domestic detergent field for their ability to disperse dirt particles. From a general point of view, thanks to their particular properties, the products according to the present invention can be used for:
- reverse osmosis system;
- scale removal;
- scale prevention and corrosion control;
- boiler cleaning;
- bottle washing;
- hard surface cleaners;
- cooling system;
- slurry dispersion;
- textile processing;
- sanitary cleaners;
- paints;
- secodnary oil recovery;
- oil drilling muds;
- laundry detergents;
- industrial cleaners;
- peroxide stabilisation;
- metal finishing;
- metal cleaners;
- geothermal water;
- set retardens for concrete
- car wash;
- flash desalination.

Obyect of the present invention is also a simple and economic process for the preparation of the phosphonates and their utilisation in the abovesaid fields, particularly as inhibitors of the formation, deposition, and adhesion of incrustations caused by insoluble salts of alkali-earth metals, in particular Ca⁺⁺, Mg⁺⁺, on metal surfaces of aqueous systems (cooling towers, boilers, gas scrubbers etc.)

The compounds object of this invention is prepared by phosphonomethylation reaction of polyamine or mixtures of polyamines, by means of the Mannich reaction illustrated hereunder.

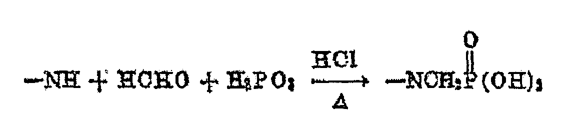

The phosphonomethylation reaction of amines according to Mannich is described in the literature , eg: K. Moedritzer and R. Irani, J. Organic. Chem. 31 (5) 1603-7: any relevant reference is to be considered mentioned herein to fully complete the invention specifications.

A typical procedure provides for the amine to be slowly added to a mixture of phosphorous acid and hydrochloric acid. The reaction mixture thus obtained is heated to reflux with addition of formaldehyde. The reaction time can vary from 1 to 5 h.

The derivatives of the polyaminomethylenephosphonate object of this invention are added to the aqueous systems in quantities between 2 and 50 mg/l in order to inhibit precipitation, deposition and adhesion of scale, especially CaCO₃.

The expression "inhibits precipitation and formation of deposits" includes threshold effect, dispersion, solubilization or modification of the precipitate's morphology. The expression "inhibits the adhesion" defines just that scale is easily removed e.g. by simple washing/rinsing and not by mechanical or chemical treatment, not being the incrustation strongly bonded to the surface to which it adheres.

The term "scale" includes incrustation formed by CaCO₃ CaSO_{4,} BaSO₄deposit and can be extended in a generalized manner to all low-solubility salts of several cations (Mg, Fe, ectc.).

The term "aqueous systems" refers to industrial and/or commercial systems that use water in heat-exchange processes and includes cooling towers, boilers, desalination systems, gas scrubbers; furthermore, processes of desalination by Reverse Osmosis (RO) are included.

Of particular importance are systems operating in severe conditions such as high pH and high concentrations of calcite (CaCO₃). The preparation and the application of the polyaminomethylenephosphonate derivatives object of the present invention are illustrated in the following examples, which clarify their applications, without however limiting the scope.

### Example 1

Into a suitable reaction vessel 350-g of triethylenetetramine were charged; thereafter the reaction mixutre was heated at 90°÷95°C.

Ethylene oxide was than added stepwise at such a rate that, with external cooling applied, the temperature did not exceed 100°C.

211 g of ethylene oxide had been added over a period 1½ hours. The resultant product was then converted in the phosphonomethylated derivates according to Mannich's reaction.

With the same synthetic path is possible to obtain β hydroxyethyl derivates of linear or branched polyamines or mixture of them in a right ratio. Other compounds of these invention can be prepared according to the procedure above describe using propylene oxide instead of ethylene oxide (β hydroxy propyl derivates).

### Example 2

Into a suitable reaction vessel 234 g of compound of example 1 were added to a 70% phosphorous acid solution (478 g) and 32% of hydrochloric acid (342 g). The mixture thus obtained was heated to reflux, 340 g of 37% aqueous formaldehyde solution was added phosphorous acid solution (478 g) and 32% of hydrochloric acid (342 g). The mixture thus obtained was heated to reflux, 340 g of 37% aqueous formaldehyde solution was added dropwise in the course of ca 1 hr and the reaction mixture was kept at reflux temperature for 1 additional hr. 300 g volatiles substances was then removed from the reaction mixture by distillation. The final product obtained was a viscous fluid having an active substance of 50%. Infrated analysis of the product showed the presence of methylenephosphonic amine groups, while P³¹ NMR analysis indicate that at least 90% of the amine groups had been phosphonomethylated. The impurities include unreacted phosphorous acid, phosphoric acid and other unidentified compounds.

By following the same synthetic method it is possible to obtain phosphonometilated derivates of polyamine or mix of polyamine having R group selected from the following class:

| | |
|---|---|
| 1. CH₂PO₃M₂ | where M may be hydrogen or an suitable cation such as alkali metal or ammonium; |
| 2. CH₂R | where R = CH₂OH; CHOHCH₃; CHOHCH₂Cl, CHOHCH₂OH |
| 3. (CH₂)ₙSO₃M | where n = 3÷4 where M may be hydrogen or a suitable cation such as alkali metal or ammonium; |
| 4. CH₂CH₂R | where WR= CONH₂, CHO, COOR₁, COOX, CN |
| | where R₁ = CH₃÷C₂H₅ |
| | where X may be hydrogen or a suitable cation such as alkali metal or ammonium. |

Where preferably at least one or more than one substituent R is different from the methylenephosphonated group.

### Example 5

### Threshold Effect on CaCO₃ at pH = 10, T= 70°C, 100ppm of CaCO₃

The method describes the procedure for the determination of the Threshold Effect, that is the ability of a dispersing agent, present in substoichiometric amounts, to inhibit the precipitation of solutions supersaturated with calcium carbonate in deionized water.

This method measures the efficiency of a dispersant by titration of the Calcium ion remaining in a solution supersaturated with CaCO₃ respectively before and after treatment in an oven at 70 °C. The greater the calcium concentration after the period in the oven, the greater the efficiency of the dispersant in preventing precipitation of CaCO₃.

Increasing substoichiometric amounts of phosphonate are dissolved in solutions containing [ Ca⁺⁺] and [CO₃⁻] obtained by mixing proper CaCl₂ and Na₂CO₃ solutions.

The precipitation of calcium carbonate is measured by titration of the filtered solution. The results obtained are summarised in table 1.

**Table 1**

| Operating Conditions: | | | |
|---|---|---|---|
| 100 ppm CaCO₃; pH =10; T = 70°C; 24 h | | | |
| Inhibition % | | | |
| **Inhibitor** | **0,25 ppm** | **0,5 ppm** | **1 ppm** |
| Example 2 | 72 | 97 | 99 |
| HEDP | 74 | 99 | 100 |
| ATMP | 75 | 99 | 100 |
| DTPMP | 65 | 85 | 100 |
| PBTC | 90 | 100 | 100 |

| | | | |
|---|---|---|---|
| HEDP = Hydroxy-ethylydene-1,1-diphosphonic Acid ATMP = Amino-tris Methylenephosphonic Acid DTPMP = Diethylenetriamine penta (methylenephosphonic acid) PBTC = Phosphono Butane tris Carboxylic Acid | | | |

### Example 6

### CaCO₃ Threshold Effect at pH = 11.5, T= 40°C, 400ppm of CaCO₃

Following the method described in example 5, the following results were obtained:

**Table 2**

| Operating Conditions: | | | | | |
|---|---|---|---|---|---|
| 400 ppm CaCO₃; pH = 11,5; T = 40°C; 24 h | | | | | |
| Inhibition % | | | | | |
| **Inhibitor** | **40 ppm** | **80 ppm** | **200 ppm** | **400 ppm** | **450 ppm** |
| Example 2 | 0 | 35 | 90 | 92 | 95 |
| ATMP | 0 | 35 | 40 | 60 | 65 |
| DTPMP | 0 | 35 | 83 | 80 | 80 |
| PBTC | 0 | 30 | 42 | 92 | 95 |

### Example 6

### CaSO₄ Threshold Effect at pH = 7; T= 70°C; 6800ppm of CaSO₄

Following the method described in example 5. In the specific case the solution of CaSO₄ was prepared starting from CaCl₂, and Na₂SO₄. The results obtained are hereunder summarised :

**Table 3**

| Operating Conditions: | | | | | |
|---|---|---|---|---|---|
| 6800 ppm CaSO₄; pH = 7; T = 70°C; 24 h | | | | | |
| Inhibition % | | | | | |
| **Inhibitor** | **0,5 ppm** | **1 ppm** | **2 ppm** | **5 ppm** | **10 ppm** |
| Example 2 | 10 | 10 | 90 | 100 | 100 |
| DTPMP | 10 | 22 | 75 | 95 | 100 |

### Example 7

### CaSO₄ Threshold Effect at pH = 7: T= 70°C; 6800ppm of CaSO₄ + 6000 ppm of Ca⁺⁺

Following the method described in example 4. In the specific case the solution of CaSO₄ was prepared starting from CaCl₂ and Na₂SO₄.

The results obtained are summarised in table 4.

**Table 4**

| Operating Conditions: | | | |
|---|---|---|---|
| 6800 ppm CaSO₄ + 6000 ppm di Ca⁺⁺; pH = 7; T = 70°C; 24 h | | | |
| Inhibition % | | | |
| **Inhibitor** | **2 ppm** | **5 ppm** | **10 ppm** |
| Example 2 | 15 | 91 | 99 |
| DTPMP | 22 | 45 | 96 |

### Example 8

### CaSO₄ Threshold Effect at pH = 7; T= 90°C; 6800ppm of CaSO₄

Following the method described in example 5. In the specific case, the solution of CaSO4 was prepared starting from CaCl₂ and Na₂SO₄.The results obtained are summarised in table 5.

**Table 5**

| Operating Conditions: | | | | | |
|---|---|---|---|---|---|
| 6800 ppm CaSO₄; pH = 7; T = 90°C; 24 h | | | | | |
| Inhibition % | | | | | |
| **Inhibitor** | **0,5 ppm** | **1 ppm** | **2 ppm** | **5 ppm** | **10 ppm** |
| Example 2 | 0 | 5 | 18 | 85 | 99 |
| DTPMP | 0 | 0 | 5 | 73 | 90 |

### Example 9

### CaSO₄ Threshold Effect at pH = 7; T= 90°C; 6800ppm of CaSO₄ + 6000 ppm of Ca++

Following the method described in example 5. In the specific case, the solution of CaSO4 was prepared starting from CaCl₂ and Na₂SO₄. The results obtained are summarised in table 6.

**Table 6**

| Operating Conditions: | | | | | |
|---|---|---|---|---|---|
| 6800 ppm CaSO₄ + 6000 ppm di Ca⁺⁺; pH = 7; T = 90°C; 24 h | | | | | |
| Inhibition % | | | | | |
| **Inhibitor** | **0,5 ppm** | **1 ppm** | **2 ppm** | **5 ppm** | **10 ppm** |
| Example 2 | 10 | 15 | 18 | 91 | 99 |
| DTPMP | 0 | 0 | 8 | 38 | 45 |

### Calcium-Sensitivity

### Example 10

The Grace "CLOUD POINT TEST" was used for testing the calcium-sensitivity. This simple method allows calcium-sensitivity to be verified visually by estimating the turbidity point of an inhibitor solution in a concentrated calcium solution. The inhibitor is added at increasing amounts to hard water having the following characteristics: 500 ppm of Ca++ ( as CaCl₂), pH = 8.3 (0.05 M of Boric buffer), at a temperature of 60°C and 100°C for 24 h.

The turbidity of solutions after 24 hours was observed. The observation confirmis that the turbidity is greater at increasing amounts of inhibitor. The results obtained are summarised in table 7 and 8.

**Table 7**

| 500ppm CaCO₃; pH = 8,3; T = 60°C | | | | |
|---|---|---|---|---|
| Inhibitor Dose | | | | |
| **Inhibitor** | **10 ppm** | **30 ppm** | **50 ppm** | **100 ppm** |
| Example 2 | clear | clear | clear | clear |
| ATMP | clear | turbid | precipitate | precipitate |

**Table 8**

| 500ppm CaCO₃; pH = 8,3; T = 100°C | | | | |
|---|---|---|---|---|
| Inhibitor Dose | | | | |
| **Inhibitor** | **10 ppm** | **30 ppm** | **50 ppm** | **100 ppm** |
| Example 2 | clear | clear | clear | clear |
| AMTP | precipitate | precipitate | precipitate | precipitate |

### Fe³⁺ Sequestering

### Example 11

The measurement of the sequestering power of iron is difficult both for traditional phosphonates and for polyaminomethylenephosphonate derivatives, object of this invention: both products have considerable dispersing ability and if we considerer the colloidal aspect of the ferric hydrate it is clear how difficult it could be to distinguish between the dispersed iron and the iron effectively sequestered; it is well known that a very fine dispersion is very similar to a solution. It must be said that often in practical applications an effective dispersion as useful as a true sequestration.

The method consists in the addition a known quantity of solution of ferric ions to an aqueous solution of inhibitor at constant pH. After 24 hours under agitation the aspect of the sample is evaluated. The samples where a precipitate is present after 24 hours of agitation are considered " precipitated" and so the first clear sample has been considered in order to attribute a sequestring value. The results obtained are summarised in table 9.

**Table 9**

| Fe3+ Sequestering Power expressed as mg Fe3+ / g of product | | | | | | | | |
|---|---|---|---|---|---|---|---|---|
| Inhibitor | pH = 5 | pH = 6 | pH = 7 | pH = 8 | pH = 9 | pH = 10 | pH = 11 | pH = 12 |
| Example 2 | 0 | 60 | 180 | 200 | 260 | 360 | 200 | 20 |
| HEDP | 240 | 280 | 320 | 360 | 800 | 800 | 1200 | 1200 |
| ATMP | 40 | 60 | 100 | 120 | 140 | 180 | 120 | 0 |
| DTPMP | 40 | 60 | 80 | 140 | 220 | 130 | 60 | 20 |

These data should be carefully evaluated because the method utilised does not allow dispersion to be distinguished from true chelation; however, internal comparison indicate that traditional phosphonates and the derivatives object of the present invention are equally effective in the control of ferric ion.

### Corrosion Inhibition

The corrosion of metal equipment is an almost universal problem for aqueous systems: on a metal surface two distinct areas coexist, anode and cathode, which in practice may be situated very close to each other and set up an electrical circuit with consequent Redox reactions leading to the solubilization of the metals. In particular iron surfaces are transformed into water-soluble Fe ^{2+/3+} ions. The corrosion, and therefore the loss of metal from part of the structure, takes place only in the anodic zone.

Without entering into the detail of the corrosion phenomenon, it is clear, however, that the damage caused by corrosive phenomena can be considerable in extent . Various methodologies and various products have been developed in the time to solve the problems related to the entity and various origins of the corrosive phenomena. One of the more widespread methodologies involves the use, in aqueous phase, of suitable "corrosion inhibitors". These compounds which can be organic or inorganic films or protective barriers between the metal surface and the of corrosion medium. This protective film formed can be:
1.1. *Precipitation* of inhibitor onto the metal surface
2.2. *Passivation* of the metal surface
3.3. *Adsorption* of inhibitor onto the metal surface through the electronic lone pair of some donor elements (N, S, O, P).

### Example 12

In the following example a simple test is described for the evaluation of the efficiency of the compounds object of this invention as corrosion inhibitors. The operating conditions and the procedure used in the test are indicated below:

Take a water with 30 French degrees of hardness, brought it at pH = 8.5 with diluted NaOH and than add the desired quantity of inhibitor.

Add carefully cleaned and weighed steel coupons to the solution.

The test lasts 5 days with a constant airflow bubbled through the solution.

After 5 days, weigh the test pieces and the loss in weight is estimate.

The results obtained are summarised in the following table:

**Table 10**

| Inhibitor | % weight loss after 5 days |
|---|---|
| Example 2 | 0,25 |
| ATMP | 0,45 |
| HEDP | 0,3 |
| Blank | 0,7 |

## Claims

1. Polyaminomethylenephosphonate derivatives useful to carry out water treatment, said polyaminomethylenephosphonate derivatives having the following general chemical structure 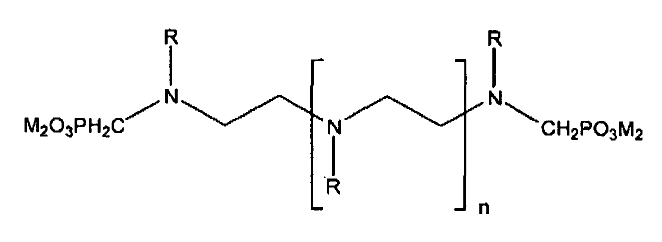 where "n" = 2;
where each R group, the same or different, is independently selected from:
CH₂PO₃M₂ where M can be an hydrogen or a suitable cation such as a alkali metal or ammonium; CH₂CH₂OH;
with the proviso that at least two R groups are different from CH₂PO₃M₂
said polyaminomethylenephosphonate derivatives being obtained by a two steps reaction:
step 1: reaction of N,N'-bis(2-aminoethyl)ethane-1,2-diamine (triethylenetetramine) (I) with ethylene oxide (II), the weight ratio (I)/(II) being 1,659/1;
step 2: phosphonomethylation of the product obtained in step 1 with formaldehyde and H₃PO₃ according to the reaction (A)
-NH + HCHO + H₃PO₃ → -NCH₂PO(OH)₂ (A)
the weight ratio product obtained in step 1 / formaldehyde / phosphorous acid being 1 / 0.5376 / 1.430; wherein the P³¹NMR analysis of the product so obtained shows that at least 90% of the amino groups were phosphonomethylated in step 2.

2. Polyaminomethylenephosphonate derivatives according to claim 1, wherein step 1 is carried out at a temperature from 90 to 95°C.

3. Polyaminomethylenephosphonate derivatives according to claim 1, wherein step 2 is carried out in presence of aqueous hydrogen chloride at reflux.

4. Polyaminomethylenephosphonate derivatives according to claim 1, wherein in step 2 phosphorous acid is used as a 70% aqueous solution.

5. Polyaminomethylenephosphonate derivatives according to claim 1, wherein in step 2 formaldehyde is used as 37% aqueous solution.

6. Use of the polyaminomethylenephosphonate derivatives according to claim 1, as scale inhibitors.

7. Polyaminomethylenephosphonate derivatives according to claim 1, **characterized in that** they are not calcium sensitive also at high pH values (>10).

## Patentansprüche

1. Polyaminomethylenphosphonat-Derivate, die geeignet sind zur Durchführung einer Wasseraufbereitung, wobei die Polyaminomethylenphosphonat-Derivate die folgende allgemeine chemische Struktur aufweisen 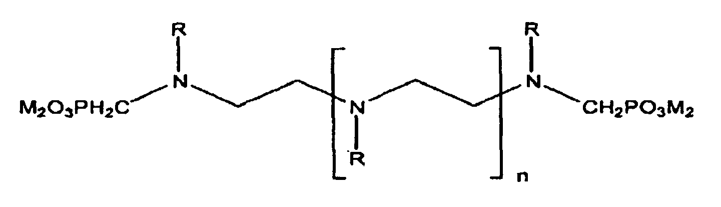 wobei "n" = 2;
wobei jede R-Gruppe, gleich oder unterschiedlich, unabhängig ausgewählt ist aus:
CH₂PO₃M₂, wobei M ein Wasserstoff oder ein geeignetes Kation, wie ein Alkalimetall oder Ammonium, ist;
CH₂CH₂OH;
mit der Maßgabe, dass wenigstens zwei R-Gruppen unterschiedlich sind zu CH₂PO₃M₂,
wobei die Polyaminomethylenphosphonat-Derivate erhalten sind durch eine ZweiSchritt-Reaktion:
Schritt 1: Umsetzen von N,N'-Bis(2-aminoethyl)ethan-1,2-diamin(triethylentetramin) (I) mit Ethylenoxid (II), wobei das Gewichtsverhältnis (I)/(II) 1,659/1 ist;
Schritt 2: Phosphonomethylierung des in Schritt 1 erhaltenen Produkts mit Formaldehyd und H₃PO₃ gemäß der Reaktion (A)
-NH + HCHO + H₃PO₃ → -NCH₂PO(OH)₂ (A)
wobei das Gewichtsverhältnis des in Schritt 1 erhaltenen Produkts / Formaldehyd / phosphorige Säure 1 / 0,5376 / 1,430 ist;
wobei die P³¹NMR-Analyse des so erhaltenen Produkts zeigt, dass wenigstens 90% der Aminogruppen in Schritt 2 phosphonomethyliert wurden.

2. Polyaminomethylenphosphonat-Derivate gemäß Anspruch 1, wobei Schritt 1 bei einer Temperatur von 90 bis 95 °C durchgeführt wird.

3. Polyaminomethylenphosphonat-Derivate gemäß Anspruch 1, wobei Schritt 2 in Gegenwart von wässrigem Chlorwasserstoff unter Rückfluss durchgeführt wird.

4. Polyaminomethylenphosphonat-Derivate gemäß Anspruch 1, wobei in Schritt 2 phosphorige Säure als 70%-ige wässrige Lösung verwendet wird.

5. Polyaminomethylenphosphonat-Derivate gemäß Anspruch 1, wobei in Schritt 2 Formaldehyd als 37%-ige wässrige Lösung verwendet wird.

6. Verwendung der Polyaminomethylenphosphonat-Derivate gemäß Anspruch 1 als Kalkablagerungs-Inhibitoren.

7. Polyaminomethylenphosphonat-Derivate gemäß Anspruch 1, **dadurch gekennzeichnet, dass** diese auch bei hohen pH-Werten (>10) nicht Kalzium-sensitiv sind.

## Revendications

1. Dérivés de polyaminométhylènephosphonate utiles pour effectuer un traitement de l'eau, lesdits dérivés de polyaminométhylènephosphonate présentant la structure chimique générale suivante : 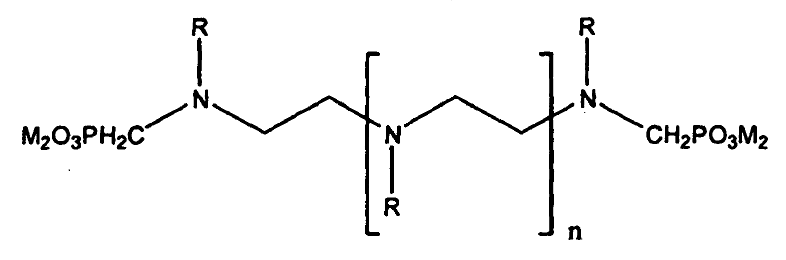 dans laquelle "n" = 2 ;
dans laquelle chacun des groupements R, qu'ils soient identiques ou différents, est indépendamment choisi parmi :
• CH₂PO₃M₂ où M peut être un hydrogène ou un cation approprié tel qu'un métal alcalin ou un ammonium ;
• CH₂CH₂OH ;
à la condition qu'au moins deux groupements R soient différents de CH₂PO₃M₂
lesdits dérivés de polyaminométhylènephosphonate étant obtenus au moyen d'une réaction en deux étapes :
étape 1: réaction de N,N'-bis(2-aminoéthyl)éthane-1,2-diamine (triéthylènetétramine) (I) avec de l'oxyde d'éthylène (II), le rapport de poids (I)/(II) étant égal à 1.659/1 ;
étape 2 : phosphonométhylation du produit obtenu au cours de l'étape 1 avec du formaldéhyde et H₃PO₃ selon la réaction (A) :
- NH + HCHO + H₃PO₃ → -NCH₂PO(OH)₂ (A)
le rapport de poids produit obtenu au cours de l'étape 1 / formaldéhyde / acide phosphoreux étant égal à 1 / 0,5376 / 1,430 ;
dans laquelle l'analyse RMN P³¹ du produit ainsi obtenu montre qu'au moins 90% des groupes aminés sont phosphonométhylés au cours de l'étape 2.

2. Dérivés de polyaminométhylènephosphonate selon la revendication 1, dans lesquels l'étape 1 est effectuée à une température comprise entre 90 et 95°C.

3. Dérivés de polyaminométhylènephosphonate selon la revendication 1, dans lesquels l'étape 2 est effectuée en présence de chlorure d'hydrogène aqueux à reflux.

4. Dérivés de polyaminométhylènephosphonate selon la revendication 1, dans lesquels au cours de l'étape 2 l'acide phosphoreux est utilisé en solution aqueuse à 70%.

5. Dérivés de polyaminométhylènephosphonate selon la revendication 1, dans lesquels au cours de l'étape 2 le formaldéhyde est utilisé en solution aqueuse à 37%.

6. Utilisation des dérivés de polyaminométhylènephosphonate selon la revendication 1, comme inhibiteurs d'entartrage.

7. Dérivés de polyaminométhylènephosphonate selon la revendication 1, **caractérisés en ce qu'**ils ne sont pas sensibles au calcium, même à des valeurs de pH élevées (> 10).
